# EUROPEAN PATENT SPECIFICATION

(11) **EP 3 220 047 B1**
(45) Date of publication and mention of the grant of the patent: **08.05.2019**
(21) Application number: 17160282.4
(22) Date of filing: 10.03.2017
(51) Int. Cl.: F23R 3/00, F23R 3/06

(54) **GAS TURBINE FLOW SLEEVE MOUNTING**
GASTURBINENSTROMHÜLSENHALTERUNG
MONTAGE DE MANCHON DE FLUX DE TURBINE À GAZ

(30) Priority: 15.03.2016 US 201615070074
(43) Date of publication of application: 20.09.2017
(73) Proprietor: General Electric Company, Schenectady, NY 12345 (US)
(72) Inventor: WILLIS, Christopher Paul, Greenville, SC 29615 (US); CIHLAR, David William, Greenville, SC 29615 (US); KEGLEY, Jonathan Hale, Greenville, SC 29615 (US); GODFREY, Andrew Grady, Greenville, SC 29615 (US); PORZIO, David Philip, Greenville, SC 29615 (US)
(74) Representative: Lee, Brenda

(56) References cited:
- EP-A2- 2 325 563
- US-A1- 2011 067 402
- US-A1- 2014 260 258

## Description

### FIELD OF THE TECHNOLOGY

The subject matter disclosed herein relates to a combustor for a gas turbine. More specifically, the disclosure is directed to mounting a combustor flow sleeve to allow for thermal expansion and contraction of a downstream end of the flow sleeve during operation of the combustor.

### BACKGROUND

Gas turbines usually burn hydrocarbon fuels and produce air polluting emissions such as oxides of nitrogen (NOx) and carbon monoxide (CO). Oxidization of molecular nitrogen in the gas turbine depends upon the temperature of gas located in a combustor, as well as the residence time for reactants located in the highest temperature regions within the combustor. Thus, the amount of NOx produced by the gas turbine may be reduced by either maintaining the combustor temperature below a temperature at which NOx is produced, or by limiting the residence time of the reactant in the combustor.

One approach for controlling the temperature of the combustor involves pre-mixing fuel and air to create a lean fuel-air mixture prior to combustion. This approach may include the axial staging of fuel injection where a first fuel-air mixture is injected and ignited at a first or primary combustion zone of the combustor to produce a main flow of high energy combustion gases, and where a second fuel-air mixture is injected into and mixed with the main flow of high energy combustion gases via a plurality of radially oriented and circumferentially spaced fuel injectors or axially staged fuel injectors positioned downstream from the primary combustion zone. Axially staged injection increases the likelihood of complete combustion of available fuel, which in turn reduces the air polluting emissions.

During operation of the combustor, it is necessary to cool one or more liners or ducts that form a combustion chamber and/or a hot gas path through the combustor. Liner cooling is typically achieved by routing compressed air through a cooling flow annulus or flow passage defined between the liner and a flow sleeve and/or an impingement sleeve that surrounds the liner. An aft end of the flow sleeve is fixedly connected to an aft frame and a forward end of the flow sleeve is slideably engaged with a spring or support seal to allow for axial expansion and contraction of the flow sleeve during operation of the combustor. However, in particular configurations, the fuel injectors of the axial stage fuel injection system are rigidly connected or hard mounted to the flow sleeve and the liner at a location between the forward and aft ends of the flow sleeve and the upstream and downstream ends of the liner, thereby preventing axial expansion or contraction of the flow sleeve between the fuel injectors and the aft frame, thus resulting in potentially undesirable mechanical stresses at the aft frame and at the fuel injector connections.

US 2011/067402 teaches a combustor, comprising an annularly shaped liner defining a hot gas path of the combustor, the liner having an upstream end and a downstream end, a flow sleeve circumferentially surrounding at least a portion of the liner wherein the flow sleeve is radially spaced from the liner and having a forward end and an aft end, and a plurality of assemblies circumferentially spaced about the flow sleeve, wherein each assembly extends radially through the flow sleeve and the liner at a location defined between the forward end and the aft end of the flow sleeve, wherein each fuel injector assembly is connected to the flow sleeve and extends through the liner. A downstream end of the liner is provided with a contoured spring clip structure on an outer surface and is thus frictionally engaged with a downstream structure so as to allow movement between the liner and the downstream structure. US 2014/260258 teaches a system for supplying a working fluid to a combustor includes a fuel nozzle, a combustion chamber disposed downstream from the fuel nozzle, an inner flow sleeve that circumferentially surrounds the combustion chamber and a plurality of injectors circumferentially arranged around the inner flow sleeve. The plurality of injectors provide for fluid communication through the inner flow sleeve and into the combustion chamber downstream from the fuel nozzle. The system further includes an outer air shield that defines an injection air plenum that surrounds the plurality of injectors. An inlet passage extends through the outer air shield to define a flow path into the injection air plenum. An outer sleeve is slidingly engaged with the outer air shield.; The outer sleeve has a first position that restricts flow through the inlet passage and a second position that increases flow through the inlet passage. According to the teaching of EP 2 325 563, a combustor includes a first liner and a second liner forming a combustion chamber. The combustion chamber is configured to receive an air-fuel mixture for combustion therein and having a longitudinal axis that defines axial and radial directions. The first liner is a first dual walled liner having a first hot wall facing the combustion chamber and a first cold wall that forms a first liner cavity with the first hot wall, the first liner cavity having first and second ends. A first liner seal is configured to seal the second end of the first liner cavity and to accommodate relative movement of the first hot wall and first cold wall generally in the axial and radial directions

### BRIEF DESCRIPTION OF THE TECHNOLOGY

The present disclosure relates to a combustor as set forth in the claims. Aspects and advantages are set forth below in the following description, or may be obvious from the description, or may be learned through practice.

One embodiment of the present disclosure is directed to a combustor. The combustor includes an annularly shaped liner that at least partially defines a hot gas path of the combustor. The liner includes an upstream end and a downstream end that is rigidly connected to an aft frame. A flow sleeve circumferentially surrounds at least a portion of the liner. The flow sleeve is radially spaced from the liner to form a cooling flow annulus therebetween. The flow sleeve includes a forward end and an aft end. A plurality of fuel injector assemblies is circumferentially spaced about the flow sleeve. Each fuel injector assembly extends radially through the flow sleeve and the liner at a location defined between the forward end and the aft end of the flow sleeve. Each fuel injector assembly is rigidly connected to the flow sleeve and to the liner. The aft portion of the flow sleeve terminates axially short of the aft frame to form an axial gap between the aft end and the aft frame and allows for unrestrained axial expansion and contraction of the aft end of the flow sleeve.

Further disclosed is a combustor which includes an outer casing at least partially defining a high pressure plenum, an end cover that is coupled to the outer casing where the end cover supports a plurality of fuel nozzles that extend axially towards a primary combustion zone. An annularly shaped liner extends downstream from the fuel nozzles and at least partially defines a hot gas path within the outer casing. The liner has an upstream end and a downstream end. The downstream end is rigidly connected to an aft frame. A flow sleeve circumferentially surrounds at least a portion of the liner. The flow sleeve is radially spaced from the liner to form a cooling flow annulus therebetween. The flow sleeve has a forward end and an aft end. A plurality of fuel injector assemblies is circumferentially spaced about the flow sleeve and axially spaced from the plurality of fuel nozzles. Each fuel injector assembly extends radially through the flow sleeve and the liner at a location defined between the forward end and the aft end of the flow sleeve. Each fuel injector assembly is rigidly connected to the flow sleeve and to the liner. The aft portion of the flow sleeve terminates axially short of the aft frame to form an axial gap between the aft end and the aft frame and to allow for unrestrained axial expansion and contraction of the aft end.

Further disclosed is a gas turbine engine which includes a compressor, a turbine and a combustor disposed downstream from the compressor and upstream from the turbine. The combustor includes an annularly shaped liner that at least partially defines a hot gas path of the combustor. The liner includes an upstream end and a downstream end. The downstream end is rigidly connected to an aft frame. A flow sleeve circumferentially surrounds at least a portion of the liner and is radially spaced from the liner to form a cooling flow annulus therebetween. The flow sleeve has a forward end and an aft end. A plurality of fuel injector assemblies is circumferentially spaced about the flow sleeve. Each fuel injector assembly extends radially through the flow sleeve and the liner at a location defined between the forward end and the aft end of the flow sleeve. Each fuel injector assembly is rigidly connected to the flow sleeve and the liner. The aft portion of the flow sleeve terminates axially short of the aft frame to form an axial gap between the aft end and the aft frame and to allow for unrestrained axial expansion and contraction of the aft end.

Those of ordinary skill in the art will better appreciate the features and aspects of such embodiments, and others, upon review of the specification.

### BRIEF DESCRIPTION OF THE DRAWINGS

A full and enabling disclosure of the of various embodiments, including the best mode thereof to one skilled in the art, is set forth more particularly in the remainder of the specification, including reference to the accompanying figures, in which:
FIG. 1 is a functional block diagram of an exemplary gas turbine that may incorporate various embodiments of the present disclosure;
FIG. 2 is a simplified cross-section side view of an exemplary combustor as may incorporate various embodiments of the present disclosure; and
FIG. 3 provides a cross sectioned side view of a portion of the combustor as shown in FIG. 2, according to at least one embodiment of the present disclosure.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

As used herein, the terms "first", "second", and "third" may be used interchangeably to distinguish one component from another and are not intended to signify location or importance of the individual components. The terms "upstream" and "downstream" refer to the relative direction with respect to fluid flow in a fluid pathway. For example, "upstream" refers to the direction from which the fluid flows, and "downstream" refers to the direction to which the fluid flows. The term "radially" refers to the relative direction that is substantially perpendicular to an axial centerline of a particular component, the term "axially" refers to the relative direction that is substantially parallel and/or coaxially aligned to an axial centerline of a particular component and the term "circumferentially" refers to the relative direction that extends around the axial centerline of a particular component.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

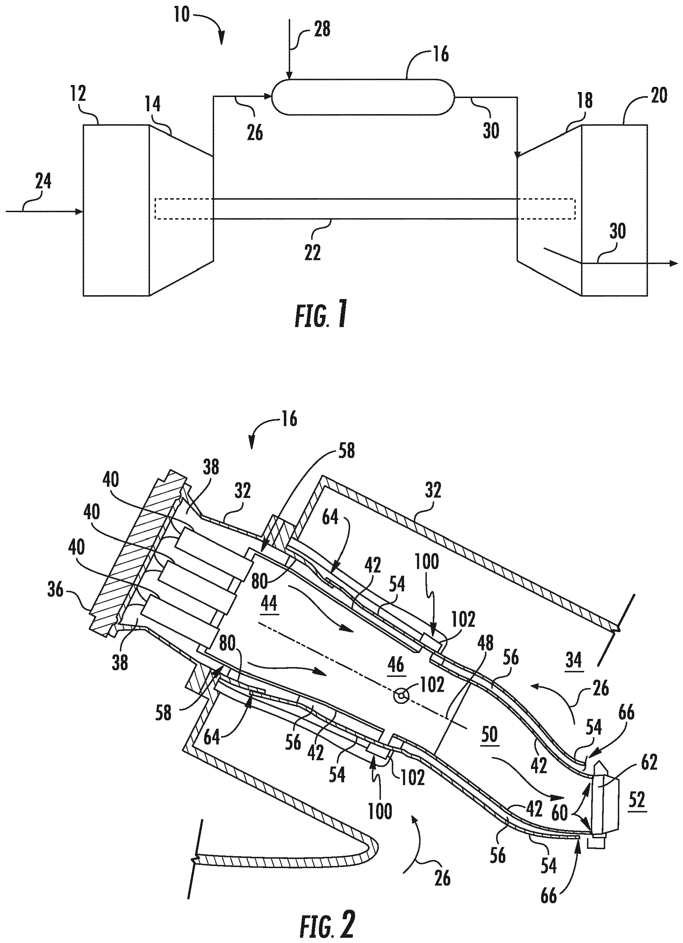

Referring now to the drawings, FIG. 1 illustrates a schematic diagram of an exemplary gas turbine 10. The gas turbine 10 generally includes an inlet section 12, a compressor 14 disposed downstream of the inlet section 12, at least one combustor 16 disposed downstream of the compressor 14, a turbine 18 disposed downstream of the combustor 16 and an exhaust section 20 disposed downstream of the turbine 18. Additionally, the gas turbine 10 may include one or more shafts 22 that couple the compressor 14 to the turbine 18.

During operation, air 24 flows through the inlet section 12 and into the compressor 14 where the air 24 is progressively compressed, thus providing compressed air 26 to the combustor 16. At least a portion of the compressed air 26 is mixed with a fuel 28 within the combustor 16 and burned to produce combustion gases 30. The combustion gases 30 flow from the combustor 16 into the turbine 18, wherein energy (kinetic and/or thermal) is transferred from the combustion gases 30 to rotor blades (not shown), thus causing shaft 22 to rotate. The mechanical rotational energy may then be used for various purposes such as to power the compressor 14 and/or to generate electricity. The combustion gases 30 exiting the turbine 18 may then be exhausted from the gas turbine 10 via the exhaust section 20.

As shown in FIG. 2, the combustor 16 may be at least partially surrounded an outer casing 32 such as a compressor discharge casing. The outer casing 32 may at least partially define a high pressure plenum 34 that at least partially surrounds various components of the combustor 16. The high pressure plenum 34 may be in fluid communication with the compressor 14 (FIG. 1) so as to receive the compressed air 26 therefrom. An end cover 36 may be coupled to the outer casing 32. In particular embodiments, the outer casing 32 and the end cover 36 may at least partially define a head end volume or portion 38 of the combustor 16. In particular embodiments, the head end portion 38 is in fluid communication with the high pressure plenum 34 and/or the compressor 14.

Fuel nozzles 40 extend axially downstream from the end cover 36. The fuel nozzles 40 may be supported at one end from the end cover 36. One or more annularly shaped liners or ducts 42 may at least partially define a primary or first combustion or reaction zone 44 for combusting the first fuel-air mixture and/or may at least partially define a secondary combustion or reaction zone 46 formed axially downstream from the first combustion zone 44 with respect to an axial centerline 48 of the combustor 16. The liner 42 at least partially defines a hot gas path 50 from the primary fuel nozzle(s) 40 to an inlet 52 of the turbine 18 (FIG. 1). In at least one embodiment, the liner 42 may be formed so as to include a tapering or transition portion. In particular embodiments, the liner 42 may be formed from a singular or continuous body.

In at least one embodiment, the combustor 16 includes an axially staged fuel injection system 100. The axially staged fuel injection system 100 includes at least one fuel injector assembly 102 axially staged or spaced from the primary fuel nozzle(s) 40 with respect to axial centerline 48. The fuel injector assembly 102 is disposed downstream of the primary fuel nozzle(s) 40 and upstream of the inlet 52 to the turbine 18. It is contemplated that a number of fuel injector assemblies 102 (including two, three, four, five, or more fuel injector assemblies 102) may be used in a single combustor 16.

In the case of more than one fuel injector assembly 102, the fuel injector assemblies 102 may be equally spaced circumferentially about the perimeter of the liner 42 with respect to circumferential direction 104, or may be spaced at some other spacing to accommodate struts or other casing components. For simplicity, the axially staged fuel injection system 100 is referred to, and illustrated herein, as having fuel injector assemblies 102 in a single stage, or common axial plane, downstream of the primary combustion zone 44. However, it is contemplated that the axially staged fuel injection system 100 may include two axially spaced stages of fuel injector assemblies 102. For example, a first set of fuel injector assemblies 102 and a second set of fuel injector assemblies 102 may be axially spaced from one another along the liner(s) 42.

Each fuel injector assembly 102 extends through liner 42 and is in fluid communication with the hot gas path 50. In various embodiments each fuel injector assembly 102 also extends through a flow or impingement sleeve 54 that at least partially surrounds liner 42. In this configuration, the flow sleeve 54 and liner 42 define an annular flow passage or cooling flow annulus 56 therebetween. The cooling flow annulus 56 at least partially defines a flow path between the high pressure plenum 34 and the head end portion 38 of the combustor 16.

In at least one embodiment, the liner 42 includes an upstream end 58 axially separated with respect to centerline 48 from a downstream end 60. The downstream end 60 of the liner 42 terminates at and/or is rigidly connected to an aft frame 62 that at least partially defines an outlet of the hot gas path 50 and/or the combustor 16. The downstream end 60 may be rigidly connected to the aft frame 62 via welding, brazing or by any connecting technique. In one embodiment, the aft frame 62 may be formed along with the liner 42 as a singular component.

As shown in FIG. 2, the flow sleeve 54 includes a forward end 64 that is axially spaced with respect to centerline 48 from an aft end 66. The plurality of fuel injector assemblies 102 is circumferentially spaced about the flow sleeve 54 and each fuel injector assembly 102 extends radially through the flow sleeve 54 and the liner 42 at a location defined between the forward end 64 and the aft end 66 of the flow sleeve 54.

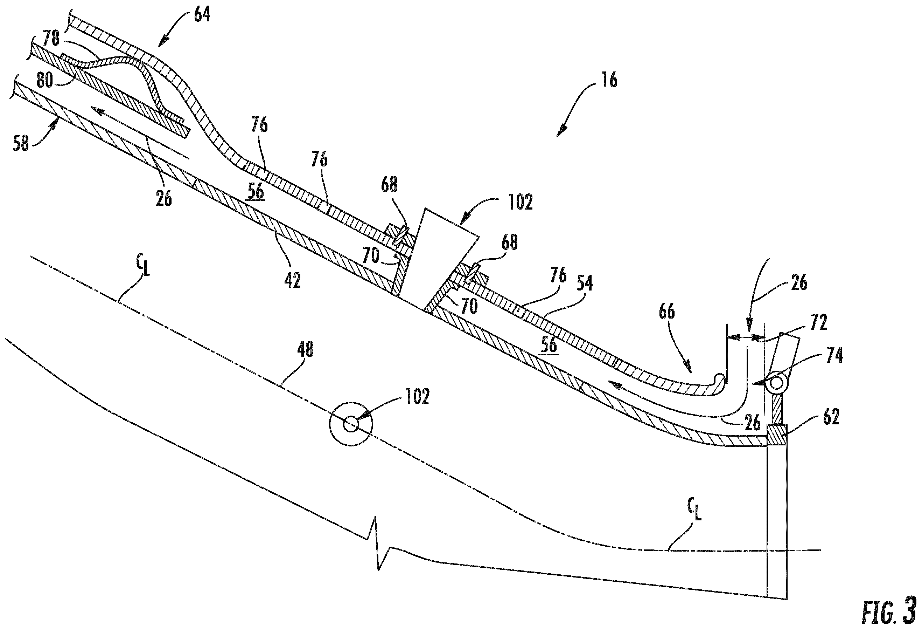

FIG. 3 provides a cross sectioned side view of a portion of the combustor including a portion of the liner 42, a portion of the flow sleeve 54 and the aft frame 62 according to at least one embodiment of the present disclosure. As shown in FIG. 3, at least one fuel injector assembly 102 of the plurality of fuel injector assemblies 102 is rigidly connected to the flow sleeve 54. For example, in one embodiment, the fuel injector assembly 102 is rigidly connected to the flow sleeve 54 via one or more mechanical fasteners 68 such as bolts or pins. The fuel injector assembly 102 is also rigidly connected to the liner 42 via supports or struts 70 that extend radially from the liner 42 to the flow sleeve 54, thereby preventing axial movement of the flow sleeve with respect to centerline 48.

As shown in FIG. 3, the aft end 66 of the flow sleeve 54 terminates axially short of the aft frame 62 with respect to centerline 48 and forms an axial gap 72 between the aft end 66 and the aft frame 62, thereby allowing for unrestrained linear or axial expansion and contraction of the aft end 66 caused by increases and decreases in temperature of the flow sleeve 54 during operation of the combustor 16. In particular embodiments, the axial gap 72 defines an inlet 74 to the cooling flow annulus 56. The inlet 74 may be in fluid communication with the high pressure plenum 34, thereby defining a flow path from the high pressure plenum 34 into the cooling flow annulus 56.

In at least one embodiment, the aft end 66 of the flow sleeve 54 diverges and/or curls radially outwardly with respect to centerline 48 and/or a centerline of the flow sleeve 54. The divergence of the aft end 66 provides a flow conditioner and/or performs as a flow catcher for directing the compressed air 26 into the cooling flow annulus 56, thereby increasing pressure within the cooling flow annulus 56. In at least one embodiment, the flow sleeve 54 defines a plurality of inlet holes 76 which are in fluid communication with the cooling flow annulus. The inlet holes 76 may be in fluid communication with the high pressure plenum 34, thereby defining multiple flow paths between the high pressure plenum 34 and the cooling flow annulus 56.

In at least one embodiment, as shown in FIG. 3, the forward end 64 of the flow sleeve 54 is slideably engaged with a spring, support or "hula" seal 78. As a result, the forward end 64 of the flow sleeve 54 is unrestrained in the axial direction with respect to centerline 48, thereby allowing for unrestrained linear or axial expansion and contraction of the forward end 64 caused by increases and decreases in temperature of the flow sleeve 54 during operation of the combustor 16.

In at least one embodiment, as shown in FIGS. 2 and 3, the forward end 64 of the flow sleeve 54 extends circumferentially around an annular support ring 80. The support ring 80 may be rigidly connected to the outer casing 32 via a flange and/or mechanical fasteners such as bolts or pins. The support ring 80 and/or the spring seal 78 may provide radial support for the forward end 64 of the flow sleeve 54. The support ring 80 may at least partially circumferentially surround at least portion of the liner 42.

## Claims

1. A combustor (16), comprising:
an annularly shaped liner (42) at least partially defining a hot gas path of the combustor (16), the liner (42) having an upstream end (58) and a downstream end (60);
a flow sleeve (54) circumferentially surrounding at least a portion of the liner (42), wherein the flow sleeve (54) is radially spaced from the liner (42) to form a cooling flow annulus (56) therebetween, the flow sleeve (54) having a forward end (64) and an aft end (66); and
a plurality of fuel injector assemblies (102) circumferentially spaced about the flow sleeve (54), wherein each fuel injector assembly (102) extends radially through the flow sleeve (54) and the liner (42) at a location defined between the forward end (64) and the aft end (66) of the flow sleeve (54), wherein each fuel injector assembly (102) is rigidly connected to the flow sleeve (54) and to the liner (42);
**characterized in that** the downstream end of the annularly shaped liner (42) is rigidly connected to an aft frame (62), whereas the aft end (66) of the flow sleeve (54) terminates axially short of the aft frame (62) to form an axial gap (72) between the aft end (66) and the aft frame (62) and allows for unrestrained axial expansion and contraction of the aft end (66).

2. The combustor (16) as in claim 1, wherein the axial gap (72) defines an inlet (74) to the cooling flow annulus (56).

3. The combustor (16) as in claim 1 or 2, wherein the forward end (64) of the flow sleeve (54) is slideably engaged with a spring seal (78).

4. The combustor (16) as in claim 1, 2 or 3, wherein the aft end (66) of the flow sleeve (54) diverges radially outwardly with respect to an axial centerline of the flow sleeve (54).

5. The combustor (16) as in any of claims 1 to 4, wherein the flow sleeve (54) defines a plurality of inlet holes (76) in fluid communication with the cooling flow annulus (56).

6. The combustor (16) as in any preceding claim, wherein the forward end (64) of the flow sleeve (54) extends circumferentially around an annular support ring (80).

7. The combustor (16) as in claim 6, wherein the support ring (80) circumferentially surrounds a portion of the liner (42).

8. The combustor (16) as in any preceding claim, comprising:
an outer casing (32) at least partially defining a high pressure plenum (34);
an end cover (36) coupled to the outer casing (32), the end cover (36) supporting a plurality of fuel nozzles (40) that extend axially towards a primary combustion zone (44);
wherein the annularly shaped liner (42) extends downstream from the fuel nozzles.

9. The combustor (16) as in the preceding claim, wherein the axial gap (72) defines an inlet (74) to the cooling flow annulus (56), wherein the axial gap (72) is in fluid communication with the high pressure plenum (34).

## Patentansprüche

1. Brennkammer (16) umfassend:
eine ringartig geformte Innenisolierung (42), die mindestens teilweise einen Heißgaspfad der Brennkammer (16) definiert, wobei die Innenisolierung (42) ein stromaufwärtiges Ende (58) und ein stromabwärtiges Ende (60) aufweist;
eine Strömungshülse (54), die umfänglich mindestens einen Abschnitt der Innenisolierung (42) umgibt, wobei die Strömungshülse (54) radial von der Innenisolierung (42) beabstandet ist, um einen Kühlströmungsringraum (56) dazwischen zu bilden, wobei die Strömungshülse (54) ein vorderes Ende (64) und ein hinteres Ende (66) aufweist; und
eine Vielzahl von Kraftstoff-Einspritzer-Anordnungen (102), die umfänglich um die Strömungshülse (54) herum beabstandet sind, wobei sich jede Kraftstoff-Einspritzer-Anordnung (102) radial durch die Strömungshülse (54) und die Innenisolierung (42) an einer Stelle erstreckt, die zwischen dem vorderen Ende (64) und dem hinteren Ende (66) der Strömungshülse (54) definiert wird, wobei jede Kraftstoff-Einspritzer-Anordnung (102) starr mit der Strömungshülse (54) und der Innenisolierung (42) verbunden ist;
**dadurch gekennzeichnet, dass** das stromabwärtige Ende der ringartig geformten Innenisolierung (42) starr mit einem hinteren Rahmen (62) verbunden ist, während das hintere Ende (66) der Strömungshülse (54) axial von dem hinteren Rahmen (62) entfernt abschließt, um einen axialen Spalt (72) zwischen dem hinteren Ende (66) und dem hinteren Rahmen (62) zu bilden, und eine uneingeschränkte axiale Ausdehnung und Kontraktion des hinteren Endes (66) ermöglicht.

2. Brennkammer (16) nach Anspruch 1, wobei der axiale Spalt (72) einen Einlass (74) zu dem Kühlströmungsringraum (56) definiert.

3. Brennkammer (16) nach Anspruch 1 oder 2, wobei das vordere Ende (64) der Strömungshülse (54) gleitend in eine Federdichtung (78) eingreift.

4. Brennkammer (16) nach Anspruch 1, 2 oder 3, wobei das hintere Ende (66) der Strömungshülse (54) im Verhältnis zu einer axialen Mittellinie der Strömungshülse (54) radial nach außen abweicht.

5. Brennkammer (16) nach einem der Ansprüche 1 bis 4, wobei die Strömungshülse (54) eine Vielzahl von Einlasslöchern (76) in Fluidkommunikation mit dem Kühlströmungsringraum (56) definiert.

6. Brennkammer (16) nach einem der vorstehenden Ansprüche, wobei sich das vordere Ende (64) der Strömungshülse (54) umfänglich um einen ringartigen Trägerring (80) erstreckt.

7. Brennkammer (16) nach Anspruch 6, wobei der Trägerring (80) einen Abschnitt der Innenisolierung (42) umfänglich umgibt.

8. Brennkammer (16) nach einem der vorstehenden Ansprüche, umfassend:
ein äußeres Gehäuse (32), das mindestens teilweise einen Hochdruckluftraum (34) definiert;
eine Endabdeckung (36), die mit dem äußeren Gehäuse (32) gekoppelt ist, wobei die Endabdeckung (36) eine Vielzahl von Kraftstoffdüsen (40) trägt, die sich axial zu einer Primärverbrennungszone (44) erstrecken;
wobei sich die ringartig geformte Innenisolierung (42) stromabwärts von den Kraftstoffdüsen erstreckt.

9. Brennkammer (16) nach dem vorstehenden Anspruch, wobei der axiale Spalt (72) einen Einlass (74) in den Kühlströmungsringraum (56) definiert, wobei der axiale Spalt (72) in Fluidkommunikation mit dem Hochdruckluftraum (34) ist.

## Revendications

1. Chambre de combustion (16), comprenant :
une chemise de forme annulaire (42) définissant au moins partiellement un trajet de gaz chaud de la chambre de combustion (16), la chemise (42) présentant une extrémité amont (58) et une extrémité aval (60) ;
un manchon d'écoulement (54) entourant de manière circonférentielle au moins une partie de la chemise (42), dans laquelle le manchon d'écoulement (54) est espacé radialement de la chemise (42) pour former un espace annulaire d'écoulement de refroidissement (56) entre eux, le manchon d'écoulement (54) présentant une extrémité avant (64) et une extrémité arrière (66) ; et
une pluralité d'ensembles d'injecteurs de carburant (102) espacés de manière circonférentielle autour du manchon d'écoulement (54), dans laquelle chaque ensemble d'injecteur de carburant (102) s'étend radialement à travers le manchon d'écoulement (54) et la chemise (42) au niveau d'un emplacement défini entre l'extrémité avant (64) et l'extrémité arrière (66) du manchon d'écoulement (54), dans laquelle chaque ensemble d'injecteur de carburant (102) est relié de manière rigide au manchon d'écoulement (54) et à la chemise (42) ;
**caractérisée en ce que** l'extrémité aval de la chemise de forme annulaire (42) est reliée de manière rigide à un châssis arrière (62), tandis que l'extrémité arrière (66) du manchon d'écoulement (54) se termine axialement en deçà du châssis arrière (62) pour former un intervalle axial (72) entre l'extrémité arrière (66) et le châssis arrière (62) et permet une expansion et une contraction axiales sans contrainte de l'extrémité arrière (66).

2. Chambre de combustion (16) selon la revendication 1, dans laquelle l'intervalle axial (72) définit une entrée (74) vers l'espace annulaire d'écoulement de refroidissement (56).

3. Chambre de combustion (16) selon la revendication 1 ou 2, dans laquelle l'extrémité avant (64) du manchon d'écoulement (54) est engagée de manière coulissante avec un joint à ressort (78).

4. Chambre de combustion (16) selon la revendication 1, 2 ou 3, dans laquelle l'extrémité arrière (66) du manchon d'écoulement (54) diverge radialement vers l'extérieur par rapport à une ligne médiane axiale du manchon d'écoulement (54).

5. Chambre de combustion (16) selon l'une quelconque des revendications 1 à 4, dans laquelle le manchon d'écoulement (54) définit une pluralité d'orifices d'entrée (76) en communication fluidique avec l'espace annulaire d'écoulement de refroidissement (56).

6. Chambre de combustion (16) selon l'une quelconque des revendications précédentes, dans laquelle l'extrémité avant (64) du manchon d'écoulement (54) s'étend de manière circonférentielle autour d'un ressort de support annulaire (80).

7. Chambre de combustion (16) selon la revendication 6, dans laquelle le ressort de support (80) entoure de manière circonférentielle une partie de la chemise (42).

8. Chambre de combustion (16) selon l'une quelconque des revendications précédentes, comprenant :
un carter externe (32) définissant au moins partiellement un plénum à haute pression (34) ;
un couvercle d'extrémité (36) couplé au carter externe (32), le couvercle d'extrémité (36) supportant une pluralité de buses de carburant (40) qui s'étendent axialement vers une zone de combustion primaire (44) ;
dans laquelle la chemise de forme annulaire (42) s'étend en aval des buses de carburant.

9. Chambre de combustion (16) selon la revendication précédente, dans laquelle l'intervalle axial (72) définit une entrée (74) vers l'espace annulaire d'écoulement de refroidissement (56), dans laquelle l'intervalle axial (72) est en communication fluidique avec le plénum à haute pression (34).
